# EUROPEAN PATENT APPLICATION

(11) **EP 4 206 249 A1**
(43) Date of publication of application: **05.07.2023**
(21) Application number: 21880055.5
(22) Date of filing: 11.10.2021
(51) Int. Cl.: C08F 290/06, B33Y 10/00, B33Y 80/00, B29C 64/106, B29C 64/268, B33Y 70/00

(54) **PHOTOCURABLE RESIN COMPOSITION FOR THREE-DIMENSIONAL SHAPING, AND METHOD FOR MANUFACTURING THREE-DIMENSIONAL OBJECT**

(30) Priority: 15.10.2020 JP 2020173693; 04.10.2021 JP 2021163277
(71) Applicant: CANON KABUSHIKI KAISHA, Tokyo 146-8501 (JP)
(72) Inventor: NISHIURA Chiaki, Tokyo 146-8501 (JP)
(74) Representative: WESER & Kollegen Patentanwälte PartmbB
(86) International application number: PCT/JP2021/037573
(87) International publication number: WO 2022/080316

(57) **Abstract**

A photocurable resin composition for three-dimensional modeling containing a polyfunctional radically polymerizable compound (A), a monofunctional radically polymerizable compound (B), a polysilsesquioxane-containing particle (C), and a curing agent (D), wherein the polyfunctional radically polymerizable compound (A) has an ethylenically unsaturated group equivalent of 700 g/eq or more and 7,000 g/eq or less, and a polysilsesquioxane-containing particle (C) content is 5 parts by mass or more and 50 parts by mass or less per 100 parts by mass of the polyfunctional radically polymerizable compound (A) and the monofunctional radically polymerizable compound (B) in total.

## Description

### Technical Field

The present invention relates to a photocurable resin composition for three-dimensional modeling and a method for producing a three-dimensional object using the photocurable resin composition.

### Background Art

As an example of the use of a liquid curable resin composition, a three-dimensional optical modeling method (optical modeling method) has been extensively studied in which a curable resin composition is cured layer by layer by light, such as ultraviolet radiation, and the resin composition layers are stacked to produce a desired three-dimensional object. Due to its higher accuracy than other methods, the optical modeling method is increasingly applied not only to the modeling of prototypes for shape confirmation (rapid prototyping) but also to the modeling of working models for functional verification and the modeling of a mold (rapid tooling). The optical modeling method is also being applied to the modeling of actual products (rapid manufacturing).

Under such circumstances, demands for curable resin compositions have become more sophisticated. For example, there is a need for a curable resin composition that can form an article with mechanical characteristics, such as high rigidity and toughness, comparable to general-purpose engineering plastics.

Patent Literature 1 discloses a technique in which a photocurable resin has high rigidity and toughness by containing a cationic polymerizable compound, a cationic photopolymerization initiator, a radically polymerizable compound, a radical photopolymerization initiator, and polymer particles with a multilayer structure composed of a core and a shell layer.

### Citation List

### Patent Literature

PTL 1: Japanese Patent Laid-Open No. 2009-62510

### Summary of Invention

### Technical Problem

Depending on the application, a modeling product used as an actual product may be required to have not only appropriate toughness but also sliding characteristics with a low friction coefficient and high wear resistance. However, it is difficult to say that there is a curable resin composition that simultaneously satisfies these physical properties.

Patent Literature 1 does not consider or disclose sliding characteristics, though the flexural modulus reaches 2000 MPa or more and the Izod impact value reaches more than 2.4 kJ/m².

To solve these problems, it is an object of the present invention to provide a photocurable resin composition for three-dimensional modeling that can form an article with high toughness and good sliding characteristics.

### Solution to Problem

A photocurable resin composition for three-dimensional modeling according to the present invention contains a polyfunctional radically polymerizable compound (A), a monofunctional radically polymerizable compound (B), a polysilsesquioxane-containing particle (C), and a curing agent (D), wherein the polyfunctional radically polymerizable compound (A) has an ethylenically unsaturated group equivalent of 700 g/eq or more and 7,000 g/eq or less, and a polysilsesquioxane-containing particle (C) content is 5 parts by mass or more and 50 parts by mass or less per 100 parts by mass of the polyfunctional radically polymerizable compound (A) and the monofunctional radically polymerizable compound (B) in total.

### Advantageous Effects of Invention

A photocurable resin composition for three-dimensional modeling according to the present invention can be used to provide a modeling product with very high toughness and good sliding characteristics.

### Brief Description of Drawings

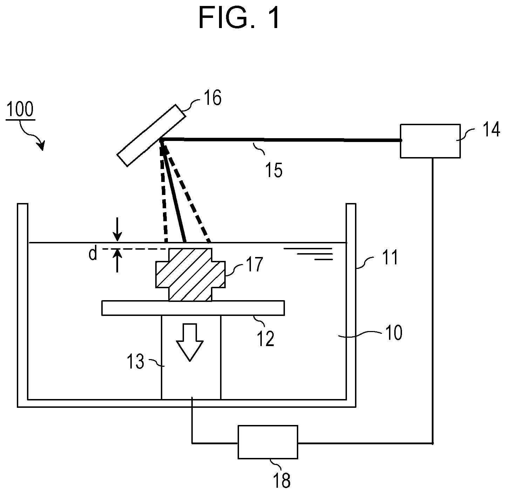

[Fig. 1] Fig. 1 is a schematic view of an example of an optical modeling apparatus.

### Description of Embodiments

Embodiments of the present invention are described below. These embodiments are only some embodiments of the present invention, and the present invention is not limited to these embodiments.

### <Polyfunctional Radically Polymerizable Compound (A)>

The polyfunctional radically polymerizable compound (A) contained in a photocurable resin composition for three-dimensional modeling according to the present invention (also referred to simply as a "curable resin composition" or a "resin composition") is a compound with two or more radically polymerizable functional groups in the molecule. Examples of the radically polymerizable functional groups include ethylenically unsaturated groups. Examples of the ethylenically unsaturated groups include a (meth)acryloyl group and a vinyl group. Examples of the polyfunctional radically polymerizable compound include (meth)acrylate compounds, (meth)acrylate compounds with a vinyl ether group, isocyanurate compounds with a (meth)acryloyl group, (meth)acrylamide compounds, urethane (meth)acrylate compounds, maleimide compounds, vinyl ether compounds, and aromatic vinyl compounds. Among these, (meth)acrylate compounds and urethane (meth)acrylate compounds are preferred in terms of availability and curability.

Although various compounds can be used as the polyfunctional radically polymerizable compound (A) according to the present invention, a polyfunctional radically polymerizable compound with a urethane structure is particularly preferred in terms of the ease of synthesis, availability, and a modeling product with high toughness. A polyfunctional radically polymerizable compound with a polyether structure is also preferred in terms of low viscosity, good liquid drainage during modeling, and a modeling product with high accuracy. A polyfunctional radically polymerizable compound with a polyester structure or a polycarbonate structure is also preferred in terms of a modeling product with high toughness. The polyfunctional radically polymerizable compound (A) may be one compound selected from these compounds or may contain two or more of these compounds. The term "polyfunctional radically polymerizable compound (A)", as used herein, refers collectively to one or more polyfunctional radically polymerizable compounds contained in a photocurable resin composition.

In the present invention, a Charpy impact strength of 1.0 kJ/m² or more measured in accordance with JIS K 7111 is regarded as high toughness, and a Charpy impact strength of 3.0 kJ/m² or more is regarded as very high toughness. When a test specimen has toughness of less than 1.0 kJ/m² or cannot be tested (for example, the test specimen is broken when notched), a modeling product may be broken when a support material is removed from the modeling product. Furthermore, a modeling product may be broken when the modeling product is fitted into another member or when the modeling product is subjected to secondary processing. The support material is a portion required in a modeling process to realize a shape for modeling and is typically removed after the modeling is completed.

Examples of the polyfunctional radically polymerizable compound (A) with a urethane structure include those produced by a reaction between a (meth)acrylate compound with a hydroxy group and a polyvalent isocyanate compound. Other examples include those produced by a reaction of a (meth)acrylate compound with a hydroxy group, a polyvalent isocyanate compound, and a polyol compound. In particular, those produced by a reaction of a (meth)acrylate compound with a hydroxy group, a polyvalent isocyanate compound, and a polyol compound are particularly preferred in terms of high toughness.

Examples of the (meth)acrylate compound with a hydroxy group include hydroxyalkyl (meth)acrylates, such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate, 2-hydroxyethyl acryloyl phosphate, 2-(meth)acryloyloxyethyl-2-hydroxypropyl phthalate, caprolactone-modified 2-hydroxyethyl (meth)acrylate, dipropylene glycol (meth)acrylate, fattyacid-modified glycidyl (meth)acrylate, poly(ethylene glycol) mono(meth)acrylate, poly(propylene glycol) mono(meth)acrylate, 2-hydroxy-3-(meth)acryloyloxypropyl (meth)acrylate, glycerin di(meth)acrylate, 2-hydroxy-3-acryloyl-oxypropyl methacrylate, pentaerythritol tri(meth)acrylate, caprolactone-modified pentaerythritol tri(meth)acrylate, ethylene-oxide-modified pentaerythritol tri(meth)acrylate, dipentaerythritol penta(meth)acrylate, caprolactone-modified dipentaerythritol penta(meth)acrylate, and ethylene-oxide-modified dipentaerythritol penta(meth)acrylate. These (meth)acrylate compounds with a hydroxy group may be used alone or in combination.

Examples of the polyvalent isocyanate compound include aromatic polyisocyanates, such as tolylene diisocyanate, diphenylmethane diisocyanate, polyphenylmethane polyisocyanate, modified diphenylmethane diisocyanate, xylylene diisocyanate, tetramethylxylylene diisocyanate, phenylene diisocyanate, and naphthalene diisocyanate; aliphatic polyisocyanates, such as pentamethylene diisocyanate, hexamethylene diisocyanate, trimethylhexamethylene diisocyanate, lysine diisocyanate, and lysine triisocyanate; and alicyclic polyisocyanates, such as hydrogenated diphenylmethane diisocyanate, hydrogenated xylylene diisocyanate, isophorone diisocyanate, norbornene diisocyanate, and 1,3-bis(isocyanatomethyl) cyclohexane; and trimeric and multimeric compounds, allophanate polyisocyanates, biuret polyisocyanates, and water-dispersible polyisocyanates of these polyisocyanates. These polyvalent isocyanate compounds may be used alone or in combination.

Examples of the polyol compound include polyether polyols, polyester polyols, polycarbonate polyols, polyolefin polyols, polybutadiene polyols, (meth)acrylic polyols, and polysiloxane polyols. These polyol compounds may be used alone or in combination.

Examples of the polyether polyols include polyether polyols with an alkylene structure, such as poly(ethylene glycol), poly(propylene glycol), poly(tetramethylene glycol), poly(butylene glycol), and poly(hexamethylene glycol), and random or block copolymers of these poly(alkylene glycol)s.

Examples of the polyester polyols include condensation polymers of a polyhydric alcohol and a polycarboxylic acid, ring-opening polymers of a cyclic ester (lactone), and reaction products of three components of a polyhydric alcohol, a polycarboxylic acid, and a cyclic ester.

Examples of the polyhydric alcohol include ethylene glycol, diethylene glycol, propylene glycol, dipropylene glycol, trimethylene glycol, 1,4-tetramethylenediol, 1,3-tetramethylenediol, 2-methyl-1,3-trimethylenediol, 1,5-pentamethylenediol, neopentyl glycol, 1,6-hexamethylenediol, 3-methyl-1,5-pentamethylenediol, 2,4-diethyl-1,5-pentamethylenediol, glycerin, trimethylolpropane, trimethylolethane, cyclohexanediols (1,4-cyclohexanediol or the like), bisphenols (bisphenol A or the like), and sugar alcohols (xylitol, sorbitol, or the like).

Examples of the polycarboxylic acid include aliphatic dicarboxylic acids, such as malonic acid, maleic acid, fumaric acid, succinic acid, glutaric acid, adipic acid, suberic acid, azelaic acid, sebacic acid, and dodecanedioic acid; alicyclic dicarboxylic acids, such as 1,4-cyclohexanedicarboxylic acid; and aromatic dicarboxylic acids, such as terephthalic acid, isophthalic acid, orthophthalic acid, 2,6-naphthalenedicarboxylic acid, paraphenylene dicarboxylic acid, and trimellitic acid.

Examples of the cyclic ester include propiolactone, β-methyl-6-valerolactone, and ε-caprolactone.

Examples of the polycarbonate polyols include reaction products of a polyhydric alcohol and phosgene, and ring-opening polymers of a cyclic carbonate (alkylene carbonate or the like).

Examples of the polyhydric alcohol include the polyhydric alcohols exemplified in the description of the polyester polyols. Examples of the alkylene carbonate include ethylene carbonate, trimethylene carbonate, tetramethylene carbonate, and hexamethylene carbonate.

The polycarbonate polyols may be compounds with a carbonate bond in the molecule and with a terminal hydroxy group, and may have an ester bond as well as a carbonate bond.

The polyfunctional radically polymerizable compound (A) with any one of a polyether structure, a polyester structure, and a polycarbonate structure may be a compound produced by reacting any one of the polyether polyols, the polyester polyols, and the polycarbonate polyols with a (meth)acrylic acid chloride or a (meth)acrylic acid compound.

In the present invention, the polyfunctional radically polymerizable compound (A) in a photocurable resin composition has an ethylenically unsaturated group equivalent of 700 g/eq or more and 7,000 g/eq or less. When the polyfunctional radically polymerizable compound (A) in a photocurable resin composition is a single compound, a polyfunctional radically polymerizable compound with an ethylenically unsaturated group equivalent of 700 g/eq or more and 7,000 g/eq or less is used. The term "ethylenically unsaturated group equivalent", as used herein, refers to a value calculated by dividing the weight-average molecular weight (Mw) of a polyfunctional radically polymerizable compound by the number of ethylenically unsaturated groups per molecule. A higher ethylenically unsaturated group equivalent results in a photocured resin composition with a lower cross-linking density and a modeling product with improved toughness. When a photocurable resin composition contains a plurality of polyfunctional radically polymerizable compounds, the ethylenically unsaturated group equivalent of the polyfunctional radically polymerizable compound (A) can be calculated as a weighted average of the ethylenically unsaturated group equivalents of the polyfunctional radically polymerizable compounds contained in the photocurable resin composition. The plurality of polyfunctional radically polymerizable compounds are mixed and used such that the ethylenically unsaturated group equivalent is 700 g/eq or more and 7,000 g/eq or less. A photocurable resin composition containing a plurality of polyfunctional radically polymerizable compounds can be a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq.

Although the polyfunctional radically polymerizable compound (A) with a higher ethylenically unsaturated group equivalent can provide a modeling product with very high toughness, an ethylenically unsaturated group equivalent of more than 7,000 g/eq causes the following problems. The polyfunctional radically polymerizable compound (A) with an excessively high ethylenically unsaturated group equivalent results in a photocured resin composition with an excessively lower cross-linking density. This results in a modeling product with lower heat resistance, elastic modulus, and shape stability. For example, heat treatment after modeling to react an unreacted monomer in a modeling product deforms the modeling product. A force applied to a modeling product also tends to deform the modeling product. Thus, an ethylenically unsaturated group equivalent of more than 7,000 g/eq is undesirable also in terms of the shape stability of a modeling product.

On the other hand, the polyfunctional radically polymerizable compound (A) with an ethylenically unsaturated group equivalent of less than 700 g/eq results in a photocured resin composition with an excessively higher cross-linking density. This results in a modeling product with lower toughness and causes a crack when the modeling product is fitted or screwed to another component or during machining, such as forming a threaded hole.

Thus, the polyfunctional radically polymerizable compound (A) preferably has an ethylenically unsaturated group equivalent of 700 g/eq or more and 7,000 g/eq or less, more preferably 700 g/eq or more and 4,000 g/eq or less in terms of a modeling product with very high toughness and shape stability.

The weight-average molecular weight (Mw) of the polyfunctional radically polymerizable compound (A) according to the present invention is a standard polystyrene equivalent weight-average molecular weight. The weight-average molecular weight can be measured by high-performance liquid chromatography. For example, the weight-average molecular weight can be measured with a high performance GPC apparatus "HLC-8220GPC" manufactured by Tosoh Corporation equipped with two columns Shodex GPCLF-804 (exclusion limit molecular weight: 2 × 10⁶, separation range: 300 to 2 × 10⁶) connected in series.

The amount of the polyfunctional radically polymerizable compound (A) in a photocurable resin composition according to the present invention is preferably 20 parts by mass or more and 75 parts by mass or less per 100 parts by mass of the polyfunctional radically polymerizable compound (A) and a monofunctional radically polymerizable compound (B) described later in total. A polyfunctional radically polymerizable compound (A) content of 20 parts by mass or more can result in a curable resin composition with high curability and a modeling product with high toughness. On the other hand, a polyfunctional radically polymerizable compound (A) content of 75 parts by mass or less can result in a curable resin composition with a viscosity suitable for an optical modeling method. Thus, the polyfunctional radically polymerizable compound (A) content of a photocurable resin composition for three-dimensional modeling is preferably 20 parts by mass or more and 75 parts by mass or less, more preferably 30 parts by mass or more and 75 parts by mass or less, still more preferably 40 parts by mass or more and 65 parts by mass or less, per 100 parts by mass of the polyfunctional radically polymerizable compound (A) and the monofunctional radically polymerizable compound (B) in total.

### <Monofunctional Radically polymerizable Compound (B)>

The monofunctional radically polymerizable compound (B) is a compound with one radically polymerizable functional group in the molecule. A curable resin composition according to the present invention containing the monofunctional radically polymerizable compound (B) can have viscosity in a range suitable for three-dimensional modeling. The mechanical characteristics of a modeling product produced by curing a curable resin composition can be adjusted in a desired range by adjusting the amount of the monofunctional radically polymerizable compound (B) to be added or by appropriately selecting the type of the monofunctional radically polymerizable compound (B).

The monofunctional radically polymerizable compound (B) may be, but is not limited to, an acrylamide compound, a (meth)acrylate compound, a maleimide compound, a styrene compound, an acrylonitrile compound, a vinyl ester compound, an N-vinyl compound, a conjugated diene compound, a vinyl ketone compound, or a vinyl halide/vinylidene halide compound. Among these, an acrylamide compound, a (meth)acrylate compound, a maleimide monomer, or an N-vinyl compound is particularly preferred in terms of a resin composition with high curability and a modeling product with good mechanical characteristics.

Examples of the acrylamide compound include (meth)acrylamide, N-methyl (meth)acrylamide, N-isopropyl (meth)acrylamide, N-tert-butyl (meth)acrylamide, N-phenyl (meth)acrylamide, N-methylol (meth)acrylamide, N,N-diacetone (meth)acrylamide, N,N-dimethyl (meth)acrylamide, N,N-diethyl (meth)acrylamide, N,N-dipropyl (meth)acrylamide, N,N-dibutyl (meth)acrylamide, N-(meth)acryloylmorpholine, N-(meth)acryloyl piperidine, N-[3-(dimethylamino)propyl]acrylamide, and N-tert-octyl (meth)acrylamide.

Examples of the (meth)acrylate compound include methyl (meth)acrylate, ethyl (meth)acrylate, n-butyl (meth)acrylate, isobutyl (meth)acrylate, t-butyl (meth)acrylate, 2-ethylhexyl (meth)acrylate, n-octyl (meth)acrylate, i-octyl (meth)acrylate, lauryl (meth)acrylate, stearyl (meth)acrylate, cyclohexyl (meth)acrylate, isobornyl (meth)acrylate, adamantyl (meth)acrylate, 3-hydroxy-1-adamantyl (meth)acrylate, 3,5-dihydroxy-1-adamantyl (meth)acrylate, 2-methyl-2-adamantyl (meth)acrylate, 2-ethyl-2-adamantyl (meth)acrylate, 2-isopropyl-2-adamantyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, glycidyl (meth)acrylate, 3-methyl-3-oxetanyl-methyl (meth)acrylate, tetrahydrofurfuryl (meth)acrylate, phenylglycidyl (meth)acrylate, dimethylaminomethyl (meth)acrylate, phenylcellosolve (meth)acrylate, dicyclopentenyl (meth)acrylate, dicyclopentenyloxyethyl (meth)acrylate, biphenyl (meth)acrylate, 2-hydroxyethyl (meth)acryloyl phosphate, phenyl (meth)acrylate, phenoxyethyl (meth)acrylate, phenoxypropyl (meth)acrylate, benzyl (meth)acrylate, butoxytriethylene glycol (meth)acrylate, 2-ethylhexyl poly(ethylene glycol) (meth)acrylate, nonylphenyl poly(propylene glycol) (meth)acrylate, methoxydipropylene glycol (meth)acrylate, glycerol (meth)acrylate, trifluoromethyl (meth)acrylate, trifluoroethyl (meth)acrylate, tetrafluoropropyl (meth)acrylate, octafluoropentyl acrylate, poly(ethylene glycol) (meth)acrylate, poly(propylene glycol) (meth)acrylate, allyl (meth)acrylate, 2,2,2-trifluoroethyl (meth)acrylate, 2,2,3,3-tetrafluoropropyl (meth)acrylate, 1H,1H,5H,octafluoropentyl (meth)acrylate epichlorohydrin-modified butyl (meth)acrylate, epichlorohydrin-modified phenoxy (meth)acrylate, ethylene oxide (EO)-modified phthalic acid (meth)acrylate, EO-modified succinic acid (meth)acrylate, caprolactone-modified 2-hydroxyethyl (meth)acrylate, N,N-dimethylaminoethyl (meth)acrylate, N,N-diethylaminoethyl (meth)acrylate, morpholino (meth)acrylate, EO-modified phosphoric acid (meth)acrylate, allyloxy acrylic acid methyl (product name: AO-MA, manufactured by Nippon Shokubai Co., Ltd.), (meth)acrylates with an imide group (product name: M-140, manufactured by Toagosei Co., Ltd.), and monofunctional (meth)acrylates with a siloxane structure.

Examples of the maleimide monomer include maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide.

Examples of the N-vinyl compound include N-vinylpyrrolidone, N-vinylcaprolactam, N-vinylimidazole, N-vinylmorpholine, and N-vinylacetamide.

Examples of other monofunctional radically polymerizable compounds include styrene derivatives, such as styrene, vinyltoluene, α-methylstyrene, chlorostyrene, and styrene sulfonic acid and salts thereof, vinyl esters, such as vinyl acetate, vinyl propionate, vinyl pivalate, vinyl benzoate, and vinyl cinnamate, and vinyl cyanide compounds, such as (meth)acrylonitrile.

These monofunctional radically polymerizable compounds may be used alone or in combination.

The amount of the monofunctional radically polymerizable compound (B) in a curable resin composition according to the present invention is preferably 25 parts by mass or more and 80 parts by mass or less, more preferably 25 parts by mass or more and 70 parts by mass or less, still more preferably 35 parts by mass or more and 60 parts by mass or less, per 100 parts by mass of the polyfunctional radically polymerizable compound (A) and the monofunctional radically polymerizable compound (B) in total. 25 parts by mass or more of the monofunctional radically polymerizable compound (B) can result in viscosity suitable for three-dimensional modeling. When the amount of the monofunctional radically polymerizable compound (B) is 80 parts by mass or less, the toughness of a modeling product obtained as the curability of a curable resin composition can satisfy a range in which the modeling product can be used as an actual product.

### <Polysilsesquioxane-Containing Particle (C)>

The polysilsesquioxane-containing particle (C) has polysilsesquioxane in a portion of the particle and maintains its shape in a curable resin composition. Particularly preferably, the polysilsesquioxane-containing particle (C) is substantially insoluble in a mixture of the polyfunctional radically polymerizable compound (A) and the monofunctional radically polymerizable compound (B). A cured product can contain the polysilsesquioxane-containing particle (C) with good sliding characteristics as a solid lubricant and have high wear resistance and low friction coefficient. The term "substantially insoluble", as used herein, means that the average particle size of the polysilsesquioxane-containing particle (C) does not decrease with time after being mixed with the polyfunctional radically polymerizable compound (A) and the monofunctional radically polymerizable compound (B).

The polysilsesquioxane-containing particle (C) may contain polysilsesquioxane in a portion of the particle and particularly preferably contains polysilsesquioxane on the surface of the particle to improve sliding characteristics. More specifically, the particle is composed entirely of polysilsesquioxane (polysilsesquioxane particle) or is a core-shell particle with a shell composed of polysilsesquioxane.

In a core-shell particle with a shell composed of polysilsesquioxane, the physical properties of the entire particle can be controlled with a material used for the core. The material of the core is preferably resin or rubber, particularly preferably rubber. In the case of a particle with a core composed of rubber, sliding a cured product of a resin composition is less likely to cause a fracture or disintegration of the polysilsesquioxane-containing particle (C). This is expected to stabilize the friction coefficient. Furthermore, the particle is softer than a particle composed entirely of polysilsesquioxane and can therefore have less wear due to scratching.

The polysilsesquioxane-containing particle (C) used in the present invention may be chemically treated on the surface to improve dispersibility in a curable resin composition, to improve dispersion stability, to prevent aggregation, or the like, and may have no polysilsesquioxane on the surface thereof. For example, the surface may be treated with a silane coupling agent or grafted with a low-molecular-weight or high-molecular-weight substance. Furthermore, the surface of a polysilsesquioxane-containing particle may be coated with a low-molecular-weight or high-molecular-weight substance.

The polysilsesquioxane content of a polysilsesquioxane particle or a polysilsesquioxane particle with a core surface-modified or coated with another material is preferably 75% by mass or more, more preferably 85% by mass or more. Even in a particle without polysilsesquioxane on the surface, the shell on the surface is easily scraped, and polysilsesquioxane of the core is exposed. Thus, the resulting cured product is assumed to have high wear resistance and low friction coefficient.

The polysilsesquioxane content of a core-shell particle with a core composed of a material other than polysilsesquioxane and a shell composed of polysilsesquioxane or the polysilsesquioxane content of a particle produced by further surface modification or coating of the core-shell particle is preferably 0.5% by mass or more of the entire particle, more preferably 1% by mass or more, still more preferably 3% by mass or more. It is assumed that exposed polysilsesquioxane on the surface of a particle results in a cured product with high wear resistance and low friction coefficient.

Silsesquioxane has various molecular structures, such as of a cage type, ladder type, or random type, or is a low-molecular-weight silsesquioxane, oligomeric silsesquioxane, or polymeric silsesquioxane with a different number of repeating units. For a curable resin composition according to the present invention, preferred is a polysilsesquioxane polymer mainly of a random type insoluble in a mixture of the polyfunctional radically polymerizable compound (A) and the monofunctional radically polymerizable compound (B). In particular, a more preferred polysilsesquioxane polymer has no weight loss and does not melt at 400°C in thermogravimetric analysis.

The polysilsesquioxane-containing particle (C) is preferably composed mainly of a structure with a siloxane bond containing three oxygen atoms per silicon atom in terms of availability, and may also have a structure with a bond containing one, two, or four oxygen atoms per silicon atom.

The polysilsesquioxane-containing particle (C) in a curable resin composition according to the present invention preferably has an average particle size of 50 um or less. In an optical modeling method, layers are often stacked at a layer thickness unit of 200 um or less, and polysilsesquioxane-containing particles with an average particle size of 50 um or less are therefore less likely to have an uneven distribution in the layers. Polysilsesquioxane-containing particles (C) with an average particle size of 0.5 um or more are less likely to significantly increase the viscosity of a curable resin composition. Thus, the polysilsesquioxane-containing particle (C) preferably has an average particle size of 0.5 um or more and 50 um or less. More preferably, the polysilsesquioxane-containing particle (C) has an average particle size of 0.7 um or more and 5 um or less in terms of availability. Furthermore, the polysilsesquioxane-containing particle (C) is preferably spherical in terms of dispersibility in a curable resin composition.

The average particle size of the polysilsesquioxane-containing particle (C) refers to the arithmetic mean of the sphere volume equivalent diameter determined by a Coulter counter method. The specific measurement principle of the Coulter counter method is described below.

A vessel containing particles dispersed in an electrolyte solution is divided into two by a wall with one through-hole. Electrodes are placed on opposite sides of the wall, and a constant current is applied between the electrodes. When the electrolyte solution is drawn with a constant suction force on one side of the wall, the electrolyte solution containing the particles passes through the through-hole. The electrolyte solution in the through-hole decreases in an amount corresponding to the volume of the particles, and the electrical resistance of the through-hole increases with decreasing amount of the electrolyte solution. At a constant electric current flowing through the through-hole, the voltage between the electrodes changes with the amount of change in the electrical resistance of the through-hole. The volume of the particles can be determined from the amount of change in the voltage. The sphere volume equivalent diameter of the particles can be determined from the volume to determine the particle size distribution.

A specific measurement method is described below, for example. First, polysilsesquioxane-containing particles and a sodium alkylbenzene sulfonate are mixed together and are added to an electrolyte solution, such as an electrolyte solution ISOTON-II manufactured by Beckman Coulter, Inc. The electrolyte solution is then subjected to dispersion treatment with an ultrasonic homogenizer to prepare a sample. A measuring apparatus for the Coulter counter method is, for example, Multisizer 3 manufactured by Beckman Coulter, Inc., and a 200 um aperture or a 400 um aperture can be used. The sphere volume equivalent diameters and the number of polysilsesquioxane-containing particles are measured with the measuring apparatus for the Coulter counter method, and the arithmetic mean of the sphere volume equivalent diameters is determined from the results.

The polysilsesquioxane-containing particle (C) without a radically polymerizable functional group on the particle surface does not react with the polyfunctional radically polymerizable compound (A) and the monofunctional radically polymerizable compound (B) contained in a curable resin composition. Thus, the ethylenically unsaturated group equivalent of the curable resin composition cannot be reduced and can be maintained in such a range that a modeling product with very high toughness can be produced. Thus, the polysilsesquioxane-containing particle (C) without a radically polymerizable functional group on the particle surface is preferably used to easily produce a cured product with high toughness. On the other hand, the polysilsesquioxane-containing particle (C) with a radically polymerizable functional group in the molecule has a high affinity for another radically polymerizable compound and is less likely to precipitate in a curable resin composition. This advantageously enhances the adhesiveness to a cured product of the radically polymerizable compound and reduces the occurrence of a crack in the cured product. When these points are regarded as important, it is preferable to use the polysilsesquioxane-containing particle (C) with a radically polymerizable functional group on the particle surface.

A curable resin composition may contain a single type of polysilsesquioxane-containing particle (C) or a plurality of types of polysilsesquioxane-containing particles (C) with different particle sizes and materials.

When a curable resin composition is applied to an optical modeling method, the polysilsesquioxane-containing particle (C) content is preferably 5 parts by mass or more and 50 parts by mass or less, more preferably 10 parts by mass or more and 30 parts by mass or less, per 100 parts by mass of the polyfunctional radically polymerizable compound (A) and the monofunctional radically polymerizable compound (B) in total. A polysilsesquioxane-containing particle (C) content in such a range results in viscosity suitable for the optical modeling method and a modeling product with high wear resistance produced by curing the resin composition.

### <Curing Agent (D)>

The curing agent (D) is more preferably a radical photopolymerization initiator. A curable resin composition may contain a thermal radical polymerization initiator in addition to a radical photopolymerization initiator. When a curable resin composition contains a thermal radical polymerization initiator, heat treatment after modeling by light irradiation can promote a polymerization reaction and further improve the mechanical characteristics of a modeling product.

### [Radical Photopolymerization Initiator]

Radical photopolymerization initiators are broadly classified into an intramolecular cleavage type and a hydrogen abstraction type. In the intramolecular cleavage type, a bond of a specific site is broken by absorbing light of a specific wavelength, and a radical is generated at the broken site. The radical acts as a polymerization initiator and initiates a polymerization of the polyfunctional radically polymerizable compound (A) and the monofunctional radically polymerizable compound (B). The hydrogen abstraction type absorbs light of a specific wavelength and has an excited state. The excited species causes a hydrogen abstraction reaction from a neighboring hydrogen donor and generates a radical. The radical acts as a polymerization initiator and initiates a polymerization of the polyfunctional radically polymerizable compound (A) and the monofunctional radically polymerizable compound (B). In the present invention, radical photopolymerization initiators may be used alone or in combination.

Known intramolecular cleavage type radical photopolymerization initiators include alkylphenone radical photopolymerization initiators, acylphosphine oxide radical photopolymerization initiators, and oxime ester radical photopolymerization initiators. These types undergo α-cleavage of a bond adjacent to a carbonyl group and generate a radical species.

Examples of the alkylphenone radical photopolymerization initiators include benzyl methyl ketal radical photopolymerization initiators, α-hydroxyalkylphenone radical photopolymerization initiators, and aminoalkylphenone radical photopolymerization initiators. Specific examples of the benzyl methyl ketal radical photopolymerization initiators include, but are not limited to 2,2'-dimethoxy-1,2-diphenylethan-1-one (Irgacure(R) 651, manufactured by BASF). Specific examples of the α-hydroxyalkylphenone radical photopolymerization initiator include, but are not limited to 2-hydroxy-2-methyl-1-phenylpropan-1-one (Darocur(R) 1173, manufactured by BASF), 1-hydroxycyclohexyl phenyl ketone (Irgacure(R) 184, manufactured by BASF), 1-[4-(2-hydroxyethoxy)phenyl]-2-hydroxy-2-methyl-1-propan-1-one (Irgacure(R) 2959, manufactured by BASF), and 2-hydroxy-1-{4-[4-(2-hydroxy-2-methylpropionyl)benzyl]phenyl}-2-methylpropan-1-one (Irgacure(R) 127, manufactured by BASF). Specific examples of the aminoalkylphenone radical photopolymerization initiator include, but are not limited to, 2-methyl-1-(4-methylthiophenyl)-2-morpholinopropan-1-one (Irgacure(R) 907, manufactured by BASF) and 2-benzylmethyl-2-dimethylamino-1-(4-morpholinophenyl)-1-butanone (Irgacure(R) 369, manufactured by BASF).

Examples of the acylphosphine oxide radical photopolymerization initiators include, but are not limited to, 2,4,6-trimethylbenzoyldiphenylphosphine oxide (Lucirin(R) TPO, manufactured by BASF) and bis(2,4,6-trimethylbenzoyl)-phenylphosphine oxide (Omnirad(R) 819, manufactured by IGM Resins)

Examples of the oxime ester radical photopolymerization initiators include, but are not limited to, (2E)-2-(benzoyloxyimino)-1-[4-(phenylthio)phenyl]octan-1-one (Irgacure(R) OXE-01, manufactured by BASF).

Examples of the hydrogen abstraction type radical photopolymerization initiators include, but are not limited to, anthraquinone derivatives, such as 2-ethyl-9,10-anthraquinone and 2-t-butyl-9,10-anthraquinone, and thioxanthone derivatives, such as isopropylthioxanthone and 2,4-diethylthioxanthone.

The addition amount of radical photopolymerization initiator in a curable resin composition is preferably 0.1 parts by mass or more and 15 parts by mass or less, more preferably 0.1 parts by mass or more and 10 parts by mass or less, per 100 parts by mass of the polyfunctional radically polymerizable compound (A) and the monofunctional radically polymerizable compound (B) in total. A small amount of radical photopolymerization initiator tends to result in insufficient polymerization. A large amount of radical photopolymerization initiator tends to result in low light transmittance and nonuniform polymerization.

### [Thermal Radical Polymerization Initiator]

The thermal radical polymerization initiator may be any known compound that can generate a radical upon heating, and is preferably an azo compound, a peroxide, or a persulfate, for example.

Examples of the azo compound include 2,2'-azobisisobutyronitrile, 2,2'-azobis(methyl isobutyrate), 2,2'-azobis-2,4-dimethylvaleronitrile, and 1,1'-azobis(1-acetoxy-1-phenylethane).

Examples of the peroxide include benzoyl peroxide, ditert-butyl benzoyl peroxide, tert-butyl peroxypivalate, and di(4-tert-butylcyclohexyl) peroxydicarbonate.

Examples of the persulfate include ammonium persulfate, sodium persulfate, and potassium persulfate.

The addition amount of thermal radical polymerization initiator is preferably 0.1 parts by mass or more and 15 parts by mass or less, more preferably 0.1 parts by mass or more and 10 parts by mass or less, per 100 parts by mass of the polyfunctional radically polymerizable compound (A) and the monofunctional radically polymerizable compound (B) in total. An excessive addition of the thermal radical polymerization initiator does not increase the molecular weight and may impair the physical properties.

### <Other Components>

A curable resin composition according to the present invention may contain various additive agents as other optional components within the scope of not impairing the objects and advantages of the present invention. Examples of the additive agents include resins, such as epoxy resin, polyurethane, polybutadiene, polychloroprene, polyester, styrene-butadiene block copolymer, polysiloxane, petroleum resin, xylene resin, ketone resin, and cellulose resin; engineering plastics, such as polycarbonate, modified poly(phenylene ether), polyamide, polyacetal, poly(ethylene terephthalate), poly(butylene terephthalate), polyphenylsulfone, polysulfone, polyarylate, poly(ether imide), poly(ether ether ketone), poly(phenylene sulfide), poly(ether sulfone), polyamideimide, liquid crystal polymers, polytetrafluoroethylene, polychlorotrifluoroethylene, and poly(vinylidene difluoride); reactive monomers, such as fluorinated oligomers, silicone oligomers, polysulfide oligomers, fluorine-containing monomers, and monomers with a siloxane structure; soft metals, such as gold, silver, and lead; substances with a layered crystal structure, such as graphite, molybdenum disulfide, tungsten disulfide, boron nitride, graphite fluoride, calcium fluoride, barium fluoride, lithium fluoride, silicon nitride, and molybdenum selenide; polymerization inhibitors, such as phenothiazine and 2,6-di-t-butyl-4-methylphenol; photosensitizers, such as benzoin compounds, acetophenone compounds, anthraquinone compounds, thioxanthone compounds, ketal compounds, benzophenone compounds, tertiary amine compounds, and xanthone compounds; and polymerization initiation aids, leveling agents, wettability improving agents, surfactants, plasticizers, ultraviolet absorbers, silane coupling agents, inorganic fillers, pigments, dyes, antioxidants, flame retardants, thickeners, and antifoaming agents.

### <Curable Resin Composition>

A curable resin composition according to the present invention is produced by adding an appropriate amount of another optional component to the essential components, that is, the polyfunctional radically polymerizable compound (A), the monofunctional radically polymerizable compound (B), the polysilsesquioxane-containing particle (C), and the curing agent (D), if necessary. More specifically, a curable resin composition according to the present invention can be produced by stirring these components in a stirring vessel typically at 30°C or more and 120°C or less, preferably 50°C or more and 100°C or less. The stirring time is typically 1 minute or more and 6 hours or less, preferably 10 minutes or more and 2 hours or less. The total amount of the polyfunctional radically polymerizable compound (A), the monofunctional radically polymerizable compound (B), and the polysilsesquioxane-containing particle (C) is preferably 25 parts by mass or more and 100 parts by mass or less, more preferably 75 parts by mass or more and 100 parts by mass or less, per 100 parts by mass of the curable resin composition excluding the curing agent (D). The curing agent (D) and another component constitute the remainder of 100 parts by mass of the curable resin composition excluding the polyfunctional radically polymerizable compound (A), the monofunctional radically polymerizable compound (B), and the polysilsesquioxane-containing particle (C).

A curable resin composition according to the present invention preferably has a viscosity of 50 mPa·s or more and 30,000 mPa·s or less, more preferably 50 mPa·s or more and 10,000 mPa·s or less, at 25°C.

A curable resin composition according to the present invention thus produced is suitably used as a modeling material for an optical modeling method. Thus, an article with a desired shape can be produced by irradiating a curable resin composition according to the present invention with a light energy beam according to slice data generated from three-dimensional shape data of a modeling article (modeling model) and supplying energy necessary for curing.

### <Cured Product>

A resin cured product according to the present invention can be produced by curing the curable resin composition by light energy irradiation. The light energy beam may be ultraviolet radiation or infrared radiation. In particular, a light beam with a wavelength of 300 nm or more and 450 nm or less can be preferably used because it is easily available due to its versatility and because the energy is easily absorbed by a radical photopolymerization initiator. A light source of the light energy beam can be an ultraviolet or infrared laser (for example, Ar laser, He-Cd laser, or the like), a mercury lamp, a xenon lamp, a halogen lamp, or a fluorescent lamp. Among these, the laser source is preferably employed because it can increase the energy level to shorten the modeling time and, due to its good light-harvesting properties, it can reduce the irradiation diameter to achieve high modeling accuracy. The light energy beam can be appropriately selected according to the type of radical polymerization initiator contained in a curable resin composition, and a plurality of light energy beams can be used in combination.

The cured product preferably has a specific wear rate of less than 0.5 mm³·N⁻¹·Km⁻¹, more preferably less than 0.3 mm³·N⁻¹·Km⁻¹. The cured product preferably has a friction coefficient of less than 1.0, more preferably less than 0.5.

### <Function of Curable Resin Composition>

A curable resin composition according to the present invention contains the polyfunctional radically polymerizable compound (A) with an ethylenically unsaturated group equivalent of 700 g/eq or more and 7,000 g/eq or less, and an article can therefore have high toughness and shape stability.

An article produced from a curable resin composition according to the present invention has a low friction coefficient and high wear resistance due to the polysilsesquioxane-containing particle (C).

### <Method for Producing Modeling Product>

A curable resin composition according to the present invention contains a photopolymerization initiator, such as a radical photopolymerization initiator, as the curing agent (D), and is therefore suitable as a modeling material used for an optical modeling method. In other words, an article produced from a curable resin composition according to the present invention can be produced by a known optical modeling method. A method for producing an article by an optical modeling method includes the steps of: providing a photocurable resin composition in a predetermined thickness and applying light energy to the photocurable resin composition based on slice data of a modeling model to cure the photocurable resin composition. The method for producing an article by an optical modeling method preferably further includes the step of heat-treating a modeling product produced by light energy irradiation. The light energy used for the irradiation is preferably laser light or light from a projector. Typical preferred examples of the optical modeling method are roughly divided into two types: a free liquid surface method and a regulated liquid surface method.

Fig. 1 illustrates an example of an optical modeling apparatus 100 using the free liquid surface method. The optical modeling apparatus 100 includes a vessel 11 filled with a liquid photocurable resin composition 10. A modeling stage 12 is provided inside the vessel 11 so as to be driven in the vertical direction by a drive shaft 13. A light energy beam 15 emitted from a light source 14 can be changed in irradiation position by a galvanometer mirror 16 controlled by a control unit 18 according to slice data and scan the surface of the vessel 11. In Fig. 1, the scan range of the light energy beam 15 is indicated by a thick broken line.

The thickness d of the photocurable resin composition 10 to be cured by the light energy beam 15 depends on the setting at the time of generation of the slice data and affects the accuracy of a modeling product 17 (reproducibility of three-dimensional shape data of a modeling article). The thickness d is achieved by controlling the driving amount of the drive shaft 13 with the control unit 18.

First, the control unit 18 controls the drive shaft 13 on the basis of the setting to supply the photocurable resin composition with the thickness d on the modeling stage 12. The liquid curable resin composition on the modeling stage 12 is selectively irradiated with a light energy beam on the basis of the slice data to form a cured layer with a desired pattern. The modeling stage 12 is then moved in the direction of the white arrow to supply an uncured curable resin composition with the thickness d to the surface of the cured layer. The light energy beam 15 is then emitted on the basis of the slice data to form a cured product integrated with the previously formed cured layer. The step of stacking such cured layers each having a predetermined thickness d is performed multiple times to produce the modeling product 17.

The modeling product 17 thus produced is taken out from the vessel 11. After an unreacted curable resin composition remaining on the surface of the modeling product 17 is removed, the modeling product 17 is subjected to cleaning or post-processing, if necessary. A cleaning agent used for the cleaning can be an alcohol organic solvent exemplified by an alcohol, such as isopropyl alcohol or ethyl alcohol. A ketone organic solvent exemplified by acetone, ethyl acetate, or methyl ethyl ketone, or an aliphatic organic solvent exemplified by a terpene may also be used. Cleaning with the cleaning agent is followed by post-processing as required. For example, post-curing by light irradiation and/or heat irradiation may be performed. The post-curing can cure the unreacted curable resin composition remaining on the surface and inside of the modeling product, reduce stickiness of the surface of the modeling product, and improve the initial strength of the modeling product. The post-processing may be the removal of a support body, polishing of the surface, or shape processing, such as forming a threaded hole.

The light energy beam used for production may be ultraviolet radiation, an electron beam, X-rays, or radiation. Among these, ultraviolet radiation with a wavelength of 300 nm or more and 450 nm or less is preferably used due to its versatility and availability at relatively low cost. A light source of ultraviolet radiation can be an ultraviolet laser (for example, Ar laser, He-Cd laser, or the like), a mercury lamp, a xenon lamp, a halogen lamp, or a fluorescent lamp. Among these, the laser source is preferably employed because it has good light-harvesting properties, can increase the energy level to shorten the modeling time, and can achieve high modeling accuracy.

When a curable resin composition provided to have a predetermined thickness is irradiated with a light energy beam, as described above, the resin can be cured by a stippling method or a line drawing method using a light energy beam narrowed in a dot shape or a line shape. Alternatively, the resin may be cured by irradiating the resin with a light energy beam in a plane through a plane drawing mask formed by arranging a plurality of minute optical shutters, such as liquid crystal shutters or digital micromirror shutters.

As in the free liquid surface method, modeling by the regulated liquid surface method is also preferred. An optical modeling apparatus using the regulated liquid surface method includes a support stage corresponding to the modeling stage 12 of the optical modeling apparatus 100 of Fig. 1 provided to raise a modeling product above the liquid surface, and a light irradiation means below the vessel 11. A typical modeling example of the regulated liquid surface method is described below. First, a support surface of a support stage provided to be able to move up and down and a bottom face of a vessel containing a curable resin composition are placed at a predetermined distance from each other, and the curable resin composition is supplied at a predetermined thickness d between the support surface of the support stage and the bottom face of the vessel. A region according to the slice data of the curable resin composition between the stage support surface and the bottom face of the vessel is then selectively irradiated with light from a laser source or a projector on the bottom face side of the vessel containing the curable resin composition. Light irradiation cures the curable resin composition between the stage support surface and the bottom face of the vessel and forms a cured layer of the resin composition. The support stage is then raised to separate the cured layer from the bottom face of the vessel.

The height of the support stage is then adjusted so that the cured layer formed on the support stage and the bottom face of the vessel have a predetermined distance d, and the curable resin composition is supplied at a predetermined thickness d between the support surface of the support stage and the bottom face of the vessel. A cured layer bonded to the previously formed cured layer is newly formed between the cured resin layer and the bottom face of the vessel by selective light irradiation in the same manner as described above. While the light irradiation pattern is changed or not changed according to the slice data, this step is performed a predetermined number of times to form a modeling product composed of a plurality of cured layers integrally stacked.

### <Use>

A curable resin composition according to the present invention and an article produced by curing the curable resin composition can be used in any application. For example, the curable resin composition can be used as a modeling material for a 3D printer in an optical modeling method, and the cured product can be used for various products, such as sports goods, medical and nursing care items, customized products, such as artificial limbs, dentures, and artificial bones, industrial machinery and equipment, precision apparatuses, electrical and electronic devices, electrical and electronic components, and construction materials.

### Exemplary Embodiments

Although the present invention will be further described in the following exemplary embodiments, the present invention is not limited to these exemplary embodiments.

### <Components>

The following components were used in the exemplary embodiments and comparative examples.

### [Polyfunctional Radically polymerizable Compound (A)]

Table 1 shows the polyfunctional radically polymerizable compounds (A) used in the exemplary embodiments and comparative examples. Although A-6 is a mixture of 70 parts by mass of a urethane acrylate and 30 parts by mass of B-5 described later, Table 1 only shows the urethane acrylate. In the resin compositions in Table 3, the urethane acrylate component in A-6 is expressed in parts by mass of the polyfunctional radically polymerizable compound (A), and B-5 in A-6 is expressed in parts by mass of the monofunctional radically polymerizable compound (B).

**[Table 1]**

| | Compound | Radically polymerizable functional group | | Weight-average molecular weight | Ethylenically unsaturated group equivalent [g/eq] | Manufacturer | Trade name |
|---|---|---|---|---|---|---|---|
| | | Functional group | Number of functional groups per molecule | | | | |
| A-1 | Urethane acrylate | Acryloyl group | 2 | 3,000 | 1,500 | Mitsubishi Chemical | Shikoh UV-6630B |
| A-2 | Diacrylate with alicyclic structure | Acryloyl group | 2 | 304 | 152 | Shin-Nakamura Chemical Co., Ltd. | NK Ester A-DCP |
| A-3 | Ethoxylated bisphenol diacrylate | Acryloyl group | 2 | 466 | 233 | Shin-Nakamura Chemical Co., Ltd. | NK Ester ABE-300 |
| A-4 | Urethane acrylate | Acryloyl group | 3 | 2,400 | 800 | Mitsubishi Chemical | Shikoh UV-7550B |
| A-5 | Urethane acrylate | Acryloyl group | 2 | 6,500 | 3,250 | Nippon Kayaku Co., Ltd. | KAYARAD UX-6101 |
| A-6 | Urethane acrylate | Acryloyl group | 2 | 14,000 | 7,000 | Mitsubishi Chemical | Shikoh UV-3550AC |
| A-7 | Ethoxylated bisphenol diacrylate | Acryloyl group | 2 | 512 | 256 | Shin-Nakamura Chemical Co., Ltd. | NK Ester A-BPE-4 |
| A-8 | Urethane acrylate | Acryloyl group | 4 | 600 | 150 | Daicel-Allnex Ltd. | EBECRYL 8210 |
| A-9 | Ethoxylated isocyanuric acid triacrylate | Acryloyl group | 3 | 423 | 141 | Shin-Nakamura Chemical Co., Ltd. | NK Ester A-9300 |
| A-10 | Urethane acrylate | Acryloyl group | 2 | 18,000 | 9,000 | Mitsubishi Chemical | Shikoh UV-3000B |

### [Monofunctional Radically Polymerizable Compound (B)]

### B-1: "DMAA" manufactured by KJ Chemicals Corporation

DMAA is an abbreviation for N,N'-dimethylacrylamide and is an acrylamide monomer with the following structure:

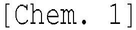

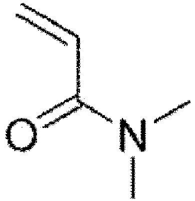

### B-2: isobornyl methacrylate (an alicyclic ester acrylate monomer)

The structure is described below.

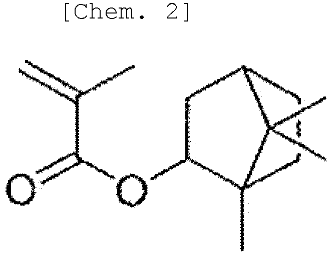

### B-3: isobornyl acrylate (an alicyclic ester acrylate monomer)

The structure is described below.

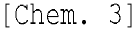

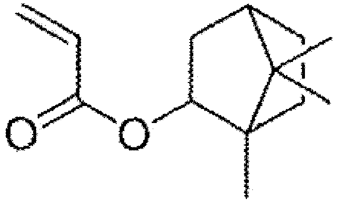

### B-4: "Imilex P" (a maleimide monomer) manufactured by Nippon Shokubai Co., Ltd.

The structure is described below.

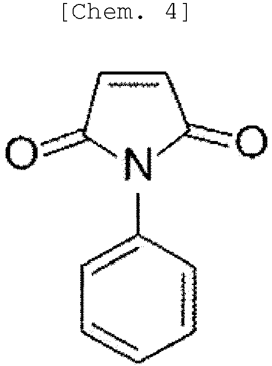

### B-5: "ACMO" (an acrylamide monomer) manufactured by KJ Chemicals Corporation

The structure is described below.

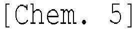

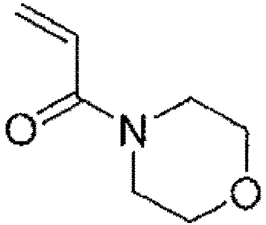

### B-6: "N-vinyl-ε-caprolactam" (a N-vinyl monomer) manufactured by Tokyo Chemical Industry Co., Ltd.

The structure is described below.

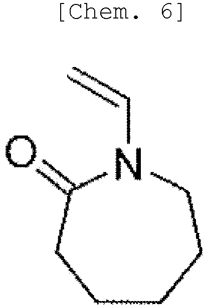

### [Polysilsesquioxane-Containing Particle (C)]

### C-1: "Silicone Resin Powder X-52-854" manufactured by Shin-Etsu Chemical Co., Ltd.

This compound is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 0.7 um that have no thermal weight loss and do not melt at 400°C. According to the safety data sheet, the organosiloxane content is 100% by mass.

### C-2: "Silicone Resin Powder KMP-590" manufactured by Shin-Etsu Chemical Co., Ltd.

This compound is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 2.0 um that have no thermal weight loss and do not melt at 400°C. According to the safety data sheet, the organosiloxane content is 100% by mass.

### C-3: "Silicone Resin Powder X-52-1621" manufactured by Shin-Etsu Chemical Co., Ltd.

This compound is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 5.0 um that have no thermal weight loss and do not melt at 400°C. According to the safety data sheet, the organopolysiloxane content is 100% by mass.

### C-4: "Silicone Composite Powder X-52-7030" manufactured by Shin-Etsu Chemical Co., Ltd.

This compound is composite particles with a core-shell structure, and the core is composed mainly of a crosslinked polydimethylsiloxane. The shell is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 0.8 um and a specific gravity of 1.01 as a whole. The polysilsesquioxane content is 12.1% by mass when calculated from the specific gravity of each component.

### C-5: "Silicone Composite Powder KMP-605" manufactured by Shin-Etsu Chemical Co., Ltd.

This compound is composite particles with a core-shell structure, and the core is composed mainly of a crosslinked polydimethylsiloxane. The shell is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 2.0 um and a specific gravity of 0.99 as a whole. The polysilsesquioxane content is 6.1% by mass when calculated from the specific gravity of each component.

### C-6: "Silicone Composite Powder KMP-600" manufactured by Shin-Etsu Chemical Co., Ltd.

This compound is composite particles with a core-shell structure, and the core is composed mainly of a crosslinked polydimethylsiloxane. The shell is composed mainly of a random polysilsesquioxane and has a methyl group as an organic substituent. The compound is substantially insoluble in a mixture of the polyfunctional radically polymerizable compound (A) and the monofunctional radically polymerizable compound (B). The compound is spherical particles with an average particle size of 5.0 um and a specific gravity of 0.99 as a whole. The polysilsesquioxane content is 6.1% by mass when calculated from the specific gravity of each component.

### C-7: Chemically modified polysilsesquioxane-containing particles

10 g of the polysilsesquioxane-containing particles C-3 were dispersed in 57 ml of xylene, and 14 ml of dimethyl-n-octyl chlorosilane and 14 ml of pyridine were added thereto. The mixture was heated at 120°C for 5 hours. The suspension after the reaction was filtered, was washed with xylene, acetone, and ethanol in this order, and was dried at 100°C for 24 hours to synthesize chemically modified polysilsesquioxane-containing particles. The reaction decreased the percentage of silicon atoms with a silanol group on the particle surface from 9.0% to 0.9%. Thus, it was judged that the silanol group on the surface reacted with dimethyl-n-octyl chlorosilane and formed a siloxane bond.

### C-8: Chemically modified polysilsesquioxane-containing particles

Chemically modified polysilsesquioxane-containing particles were synthesized in the same manner as C-7 except that dimethyl-n-octyl chlorosilane was changed to 3-(chlorodimethylsilyl)propyl methacrylate. The reaction decreased the percentage of silicon atoms with a silanol group on the particle surface from 9.0% to 1.0%. Thus, it was judged that the silanol group on the surface reacted with 3-(chlorodimethylsilyl)propyl methacrylate and formed a siloxane bond.

The percentage of silicon atoms with a silanol group on the surface of the polysilsesquioxane-containing particles was determined by X-ray photoelectron spectroscopy (XPS). The measurement method was based on a method described in Japanese Patent Laid-Open No. 2017-198458.

### (Method for Measuring Average Particle Size)

First, 5 mg of polysilsesquioxane-containing particles were mixed with 2 ml of a sodium alkylbenzene sulfonate, and the mixture was added to 100 ml of the electrolyte solution ISOTON-II manufactured by Beckman Coulter, Inc. Dispersion treatment was then performed with an ultrasonic homogenizer for approximately 5 minutes to prepare a sample. The measuring apparatus for the Coulter counter method was Multisizer 3 manufactured by Beckman Coulter, Inc., and a 200 um aperture or a 400 um aperture was used. The sphere volume equivalent diameters and the number of polysilsesquioxane-containing particles were measured with the apparatus, and the average particle size (arithmetic mean of the sphere volume equivalent diameters) was determined from the results.

### [Curing Agent (D)]

### D-1: Omnirad 819 (manufactured by IGM Resins, radical photopolymerization initiator, bis(2,4,6-trimethylbenzoyl)phenylphosphine oxide)

### [Polysiloxane-Containing Particles]

### E-1: "Silicone Rubber Powder KMP-597" manufactured by Shin-Etsu Chemical Co., Ltd.

This compound is spherical particles with a crosslinked dimethylsiloxane structure and with an average particle size of 5.0 um. The average particle size was measured in the same manner as for the polysilsesquioxane-containing particle (C).

### [Silsesquioxane Compound]

### F-1: "AC-SQ TA-100" manufactured by Toagosei Co., Ltd.

This compound is composed mainly of a cage polysilsesquioxane and has an acryloyl group as an organic substituent. The compound can be dissolved in and copolymerized with a mixture of the polyfunctional radically polymerizable compound (A) and the monofunctional radically polymerizable compound (B).

### F-2: "A PSS-octamethyl substitution product" manufactured by Sigma-Aldrich Corporation

This compound is composed mainly of a cage polysilsesquioxane and has a methyl group as an organic substituent. The compound can be dissolved in a mixture of the polyfunctional radically polymerizable compound (A) and the monofunctional radically polymerizable compound (B).

### <Exemplary Embodiment 1>

### [Preparation of Curable Resin Composition]

The components were blended in accordance with the formulae shown in Table 2, were heated to 75°C, and were stirred with a stirrer for 2 hours to prepare a curable resin composition.

The polyfunctional radically polymerizable compound (A) content shown in Table 2 represents the polyfunctional radically polymerizable compound (A) content expressed in parts by mass per 100 parts by mass of the polyfunctional radically polymerizable compound (A) and the monofunctional radically polymerizable compound (B) in total. Likewise, the monofunctional radically polymerizable compound (B) content represents the monofunctional radically polymerizable compound (B) content expressed in parts by mass per 100 parts by mass of the polyfunctional radically polymerizable compound (A) and the monofunctional radically polymerizable compound (B) in total. The polysilsesquioxane-containing particle (C) content represents the polysilsesquioxane-containing particle (C) content expressed in parts by mass per 100 parts by mass of the polyfunctional radically polymerizable compound (A) and the monofunctional radically polymerizable compound (B) in total.

Exemplary Embodiment 1 is an example including a plurality of polyfunctional radically polymerizable compounds as the polyfunctional radically polymerizable compound (A). Exemplary Embodiment 1 is a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq. As shown in Table 2, the mixing ratio is adjusted so that the polyfunctional radically polymerizable compound (A) has an ethylenically unsaturated group equivalent of 893 g/eq.

### [Preparation of Test Specimen X]

A test specimen was prepared from a prepared photocurable resin composition by the following method. First, a mold with a length of 80 mm, a width of 10 mm, and a thickness of 4 mm was placed between two quartz glass sheets, and the curable resin composition was poured into the mold. The poured curable resin composition was irradiated with ultraviolet radiation at 5 mW/cm² from both sides of the mold for 360 seconds using an ultraviolet radiation apparatus (trade name "LIGHT SOURCE EXECURE 3000" manufactured by HOYA CANDEO OPTRONICS) to form a cured product. The total energy to cure the photocurable resin composition was 3600 mJ/cm². The cured product was heat-treated in a heating oven at 50°C for 1 hour and in a heating oven at 100°C for 2 hours to prepare a test specimen X with a length of 80 mm, a width of 10 mm, and a thickness of 4 mm. The test specimen X was used for the Charpy impact test described later.

### [Preparation of Test Specimen Y]

A prepared curable resin composition was shaped according to slice data based on a three-dimensional shape of a rectangular parallelepiped with a size of 30 mm x 30 mm x 4 mm using a 3D printer (DWS-020X manufactured by DWS, an optical modeling apparatus using a regulated liquid surface method). A modeling product was prepared by stacking a cured layer 30 mm x 4 mm x 50 um in thickness to a height of 30 mm. The modeling product was irradiated with ultraviolet light for 30 minutes using a UV Curing Unit M (manufactured by DWS) and was then heat-treated in a heating oven at 50°C for 1 hour and in a heating oven at 100°C for 2 hours to prepare a test specimen Y. The test specimen Y was used to evaluate modeling properties, friction coefficient, and wear resistance described below.

### [Evaluation]

### (Modeling Properties)

The dimensional error of the test specimen Y with respect to a shape of 30 mm x 30 mm x 4 mm was evaluated as the success or failure of modeling. The evaluation criteria were described below. Satisfying the evaluation criterion B is judged to be good modeling properties, and satisfying the evaluation criterion A is judged to be excellent modeling properties. The size of each side was measured after modeling with the 3D printer and before heat treatment at 100°C. Table 2 shows the results.
A: The dimensional error was within ±3%.
B: The dimensional error was more than ±3% and within ±20%.
C: The modeling was impossible. The phrase "The modeling was impossible", as used herein, refers to a remarkable failure, such as falling of a modeling product from the modeling stage during modeling of the test specimen Y.

### (Specific Wear Rate and Friction Coefficient)

The specific wear rate and friction coefficient were measured in accordance with a JIS K 7218 A method under the following conditions.
Measuring apparatus: friction abrasion tester MODEL EMF-III-F manufactured by A&D Company, Limited
Test environment: 23°C ± 2°C, humidity 50% RH ± 5% RH
Test specimen: Test specimen Y (size: 30 mm x 30 mm, thickness: 4 mm)
Mating material: manufactured by S45C, ring shape, surface roughness approximately 0.8 pmRa, contact area 2 cm²
Load: 50 N
Sliding speed: 50 cm/s
Test time: 100 minutes
Sliding distance: 3 Km

### (1) Specific wear rate

(1) A mating material was pressed against a 30 mm x 30 mm surface of the test specimen Y under the load described above and was slid at the speed described above. The sliding was stopped after 100 minutes, and the wear weight was measured from the weight of the test specimen Y before and after the sliding. The wear volume was calculated from the measured wear weights and the specific gravity of the test specimen Y. The calculated wear volume was divided by the sliding distance and the load to obtain a specific wear rate (unit: mm³·N⁻¹·Km⁻¹), which was used as a measure of wear resistance. The evaluation criteria for wear resistance were described below. A wear depth of more than 1.5 mm within 100 minutes after the start of sliding was rated C as the limit of measurement. Satisfying the evaluation criterion B is judged to be high wear resistance, and satisfying the evaluation criterion A is judged to be very high wear resistance. Table 2 shows the results.
   A: Less than 0.3 mm³·N⁻¹·Km⁻¹
   B: 0.3 mm³·N⁻¹·Km⁻¹ or more and less than 0.5 mm³·N⁻¹·Km⁻¹.
   C: 0.5 mm³·N⁻¹·Km⁻¹ or more

### (2) Friction Coefficient

The friction coefficient was the average friction coefficient for 10 seconds before and after 60 minutes after the start of sliding divided by the load. The evaluation criteria for friction coefficient were described below. Satisfying the evaluation criterion B is judged to be a good friction coefficient, and satisfying the evaluation criterion A is judged to be an excellent friction coefficient. Table 2 shows the results.
A: Less than 0.5
B: 0.5 or more and less than 1.0
C: 1.0 or more

### (Charpy Impact Test)

In accordance with JIS K 7111, a 45-degree notch with a depth of 2 mm was formed in the central portion of the test specimen X using a notching machine (trade name "Notching Tool A-4" manufactured by Toyo Seiki Seisaku-Sho, Ltd.). The test specimen was broken with an impact tester (trade name "IMPACT TESTER IT", manufactured by Toyo Seiki Seisaku-Sho, Ltd.) from the back side of the notch at an energy of 2 J. The energy required for fracture was calculated from the angle to which a hammer swung up to 150 degrees in advance swung up after the fracture of the test specimen and was defined as the Charpy impact strength as a measure of toughness. When the test specimen X was broken by notching, the Charpy impact strength was 0.0 KJ/m². The evaluation criteria for toughness were described below. Satisfying the evaluation criterion B is judged to be high toughness, and satisfying the evaluation criterion A is judged to be very high toughness. Table 2 shows the results.
A: 3.0 kJ/m² or more
B: 1.0 kJ/m² or more and less than 3.0 kJ/m²
C: Less than 1.0 kJ/m²

**[Table 2]**

| | | | Exemplary Embodiment | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| Resin composition | Polyfunctional radically polymerizable compound (A) | A-1 [parts by mass] | 40.0 | 40.0 | 40.0 | 40.0 | 40.0 | 40.0 | 40.0 | 40.0 | 40.0 | 40.0 | 40.0 |
| | | A-2 [parts by mass] | 15.0 | 15.0 | 15.0 | 15.0 | 15.0 | 15.0 | 15.0 | 15.0 | 15.0 | 15.0 | 15.0 |
| | | A-3 [parts by mass] | 20.0 | 20.0 | 20.0 | 20.0 | 20.0 | 20.0 | 20.0 | 20.0 | 20.0 | 20.0 | 20.0 |
| | | Ethylenically unsaturated group equivalent [g/eq] | 893 | 893 | 893 | 893 | 893 | 893 | 893 | 893 | 893 | 893 | 893 |
| | Monofunctional radically polymerizable compound (B) | B-1 [parts by mass] | 25.0 | 25.0 | 25.0 | 25.0 | 25.0 | 25.0 | 25.0 | 25.0 | 25.0 | 25.0 | 25.0 |
| | Polysilsesquioxane-containing particle (C) | C-1 [parts by mass] | 25.0 | 0.0 | 0.0 | 0.0 | 0.0 | 0.0 | 0.0 | 0.0 | 0.0 | 0.0 | 0.0 |
| | | C-2 [parts by mass] | 0.0 | 0.0 | 5.3 | 11.1 | 25.0 | 42.9 | 0.0 | 66.7 | 0.0 | 0.0 | 0.0 |
| | | C-3 [parts by mass] | 0.0 | 25.0 | 0.0 | 0.0 | 0.0 | 0.0 | 0.0 | 0.0 | 0.0 | 0.0 | 0.0 |
| | Polysiloxane particle | E-1 [parts by mass] | 0.0 | 0.0 | 0.0 | 0.0 | 0.0 | 0.0 | 0.0 | 0.0 | 25.0 | 0.00 | 0.0 |
| | Silsesquioxane compound | F-1 [parts by mass] | 0.0 | 0.0 | 0.0 | 0.0 | 0.0 | 0.0 | 0.0 | 0.0 | 0.0 | 11.1 | 0.0 |
| | | F-2 [parts by mass] | 0.0 | 0.0 | 0.0 | 0.0 | 0.0 | 0.0 | 0.0 | 0.0 | 0.0 | 0.0 | 11.1 |
| | Curing agent (D) | D-1 [parts by mass] | 1.0 | 1.0 | 1.0 | 1.0 | 1.0 | 1.0 | 1.0 | 1.0 | 1.0 | 1.0 | 1.0 |
| Evaluation | Modeling properties | Rating | A | A | A | A | A | B | A | C | A | A | A |
| | Specific wear rate | Measured value [mm³·N⁻¹·Km⁻¹] | 0.29 | 0.11 | 0.49 | 0.20 | 0.20 | 0.19 | Limit of measurement | - | 0.79 | 0.40 | 0.52 |
| | | Rating | A | A | B | A | A | A | C | - | C | B | C |
| | Friction coefficient | Measured value | 0.71 | 0.49 | 0.85 | 0.78 | 0.81 | 0.70 | 1.09 | - | 0.91 | 0.75 | 0.79 |
| | | Rating | B | A | B | B | B | B | C | - | B | B | B |
| | Charpy impact strength | Measured value [KJ/m²] | 2.4 | 1.9 | 3.3 | 3.0 | 2.1 | 1.3 | 4.5 | - | 4.1 | 0.8 | 3.6 |
| | | Rating | B | B | A | A | B | B | A | - | A | C | A |

### <Exemplary Embodiments 2 to 6 and Comparative Examples 1 to 5>

A curable resin composition was prepared in the same manner as in Exemplary Embodiment 1 except that the type of each component or the component content was changed as shown in Table 2, and was evaluated in the same manner as in Exemplary Embodiment 1. Table 2 shows the results.

Each of Exemplary Embodiments 2 to 6 and Comparative Examples 1 to 5 is a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq. As shown in Table 2, the mixing ratio is adjusted so that the ethylenically unsaturated group equivalent is 893 g/eq.

### <Exemplary Embodiments 7 to 18 and Comparative Examples 6 to 8>

A curable resin composition was prepared in the same manner as in Exemplary Embodiment 1 except that the type of each component or the component content was changed as shown in Tables 3 and 4, and was evaluated in the same manner as in Exemplary Embodiment 1. Table 3 shows the results.

Each of Exemplary Embodiments 10 to 18 and Comparative Examples 7 and 8 is an example including a plurality of polyfunctional radically polymerizable compounds as the polyfunctional radically polymerizable compound (A). Like Exemplary Embodiment 1, each of Exemplary Embodiments 10 to 18 is a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq. As shown in Tables 3 and 4, the mixing ratio is adjusted so that the ethylenically unsaturated group equivalent is 700 g/eq or more and 7,000 g/eq or less. On the other hand, Comparative Example 7 is prepared such that the polyfunctional radically polymerizable compound (A) has an ethylenically unsaturated group equivalent of less than 700 g/eq. Comparative Example 6 contains a urethane acrylate with an ethylenically unsaturated group equivalent of 150 g/eq as the polyfunctional radically polymerizable compound (A). Comparative Example 8 contains a urethane acrylate with an ethylenically unsaturated group equivalent of 9,000 g/eq as the polyfunctional radically polymerizable compound (A).

**[Table 3]**

| | | | Exemplary Embodiment | | | | | | | Comparative Example | | |
|---|---|---|---|---|---|---|---|---|---|---|---|---|
| | | | 7 | 8 | 9 | 10 | 11 | 12 | 13 | 6 | 7 | 8 |
| Resin composition | Polyfunctional radically polymerizable compound (A) | A-1 [parts by mass] | 0.0 | 0.0 | 0.0 | 40.0 | 40.0 | 40.0 | 40.0 | 0.0 | 0.0 | 0.0 |
| | | A-2 [parts by mass] | 0.0 | 0.0 | 0.0 | 15.0 | 2.5 | 15.0 | 15.0 | 0.0 | 0.0 | 0.0 |
| | | A-3 [parts by mass] | 0.0 | 0.0 | 0.0 | 0.0 | 0.0 | 5.0 | 10.0 | 0.0 | 0.0 | 0.0 |
| | | A-4 [parts by mass] | 40.0 | 0.0 | 0.0 | 0.0 | 0.0 | 0.0 | 0.0 | 0.0 | 0.0 | 0.0 |
| | | A-5 [parts by mass] | 0.0 | 55.0 | 0.0 | 0.0 | 0.0 | 0.0 | 0.0 | 0.0 | 0.0 | 0.0 |
| | | A-6 [parts by mass] | 0.0 | 0.0 | 40.0 | 0.0 | 0.0 | 0.0 | 0.0 | 0.0 | 0.0 | 0.0 |
| | | A-7 [parts by mass] | 0.0 | 0.0 | 0.0 | 20.0 | 0.0 | 0.0 | 0.0 | 0.0 | 41.3 | 0.0 |
| | | A-8 [parts by mass] | 0.0 | 0.0 | 0.0 | 0.0 | 0.0 | 0.0 | 0.0 | 55.0 | 0.0 | 0.0 |
| | | A-9 [parts by mass] | 0.0 | 0.0 | 0.0 | 0.0 | 0.0 | 0.0 | 0.0 | 0.0 | 13.7 | 0.0 |
| | | A-10 [parts by mass] | 0.0 | 0.0 | 0.0 | 0.0 | 0.0 | 0.0 | 0.0 | 0.0 | 0.0 | 40.0 |
| | | Ethylenically unsaturated group equivalent [g/eq] | 800 | 3,250 | 7,000 | 899 | 1,421 | 1,057 | 994 | 150 | 227 | 9,000 |
| | Monofunctional radically polymerizable compound (B) | B-1 [parts by mass] | 0.0 | 0.0 | 0.0 | 25.0 | 0.0 | 0.0 | 0.0 | 0.0 | 0.0 | 0.0 |
| | | B-2 [parts by mass] | 0.0 | 45.0 | 0.0 | 0.0 | 0.0 | 0.0 | 0.0 | 45.0 | 45.0 | 30.0 |
| | | B-3 [parts by mass] | 30.0 | 0.0 | 30.0 | 0.0 | 0.0 | 0.0 | 0.0 | 0.0 | 0.0 | 0.0 |
| | | B-4 [parts by mass] | 0.0 | 0.0 | 0.0 | 0.0 | 20.0 | 0.0 | 0.0 | 0.0 | 0.0 | 30.0 |
| | | B-5 [parts by mass] | 30.0 | 0.0 | 30.0 | 0.0 | 37.5 | 0.0 | 35.0 | 0.0 | 0.0 | 0.0 |
| | | B-6 [parts by mass] | 0.0 | 0.0 | 0.0 | 0.0 | 0.0 | 40.0 | 0.0 | 0.0 | 0.0 | 0.0 |
| | Polysilsesquioxane-containing particle (C) | C-3 [parts by mass] | 25.0 | 25.0 | 25.0 | 25.0 | 25.0 | 25.0 | 25.0 | 25.0 | 25.0 | 25.0 |
| | Curing agent (D) | D-1 [parts by mass] | 1.0 | 1.0 | 1.0 | 1.0 | 1.0 | 1.0 | 1.0 | 1.0 | 1.0 | 1.0 |
| Evaluation | Modeling properties | Rating | A | B | A | A | A | A | A | A | A | C |
| | Specific wear rate | Measured value [mm³·N⁻¹·Km⁻¹] | 0.19 | 0.18 | 0.18 | 0.14 | 0.18 | 0.12 | 0.08 | 0.17 | 0.18 | - |
| | | Rating | A | A | A | A | A | A | A | A | A | - |
| | Friction coefficient | Measured value | 0.52 | 0.47 | 0.41 | 0.45 | 0.48 | 0.48 | 0.26 | 0.55 | 0.49 | - |
| | | Rating | B | A | A | A | A | A | A | B | A | - |
| | Charpy impact strength | Measured value [kJ/m²] | 1.5 | 4.5 | 5.9 | 2.1 | 3.1 | 3.3 | 1.6 | 0.5 | 0.7 | - |
| | | Rating | B | A | A | B | A | A | B | C | C | - |

**[Table 4]**

| | | | Exemplary Embodiment | | | | |
|---|---|---|---|---|---|---|---|
| | | | 14 | 15 | 16 | 17 | 18 |
| Resin composition | Polyfunctional radically polymerizable compound (A) | A-1 [parts by mass] | 40.0 | 40.0 | 40.0 | 40.0 | 40.0 |
| | | A-2 [parts by mass] | 15.0 | 15.0 | 15.0 | 15.0 | 15.0 |
| | | A-3 [parts by mass] | 10.0 | 10.0 | 10.0 | 10.0 | 10.0 |
| | | Ethylenically unsaturated group equivalent [g/eq] | 994 | 994 | 994 | 994 | 994 |
| | Monofunctional radically polymerizable compound (B) | B-5 [parts by mass] | 35.0 | 35.0 | 35.0 | 35.0 | 35.0 |
| | Polysilsesquioxane-containing particle (C) | C-4 [parts by mass] | 20.0 | 0.0 | 0.0 | 0.0 | 0.0 |
| | | C-5 [parts by mass] | 0.0 | 20.0 | 0.0 | 0.0 | 0.0 |
| | | C-6 [parts by mass] | 0.0 | 0.0 | 20.0 | 0.0 | 0.0 |
| | | C-7 [parts by mass] | 0.0 | 0.0 | 0.0 | 20.0 | 0.0 |
| | | C-8 [parts by mass] | 0.0 | 0.0 | 0.0 | 0.0 | 20.0 |
| | Curing agent (D) | D-1 [parts by mass] | 0.5 | 0.5 | 0.5 | 0.5 | 0.5 |
| Evaluation | Modeling properties | Rating | A | A | A | A | A |
| | Specific wear rate | Measured value [mm³·N⁻¹·Km⁻¹] | 0.07 | 0.03 | 0.05 | 0.26 | 0.24 |
| | | Rating | A | A | A | A | A |
| | Friction coefficient | Measured value | 0.36 | 0.34 | 0.19 | 0.39 | 0.41 |
| | | Rating | A | A | A | A | A |
| | Charpy impact strength | Measured value [kJ/m²] | 1.4 | 1.3 | 1.7 | 1.9 | 1.6 |
| | | Rating | B | B | B | B | B |

Tables 2 to 4 show that all of Exemplary Embodiments 1 to 18 according to the present invention had good modeling properties. The test specimen X produced by curing a curable resin composition according to the present invention had a Charpy impact strength of 1.0 KJ/m² or more, and the test specimen Y had a friction coefficient of less than 1.0 and a specific wear rate of less than 0.5 mm³·N⁻¹·Km⁻¹. Thus, it was confirmed that a photocurable resin composition according to the present invention was used to produce an article with both high toughness and good sliding characteristics.

In the results shown in Table 2, the specific wear rate and friction coefficient of Comparative Example 1, which contained no polysilsesquioxane-containing particle (C), could not satisfy the evaluation criterion B. Comparative Example 2, in which the addition amount of the polysilsesquioxane-containing particle (C) was 66.7 parts by mass, had increased viscosity and could not produce a three-dimensional modeling product. These results and the results of Exemplary Embodiments 1 to 6 show that the addition amount of the polysilsesquioxane-containing particle (C) is preferably 5 parts by mass or more and 50 parts by mass or less per 100 parts by mass of the polyfunctional radically polymerizable compound (A) and the monofunctional radically polymerizable compound (B) in total.

The specific wear rate of Comparative Example 3, in which the polysiloxane particles E-1 (composed mainly of a siloxane bond containing two oxygen atoms per silicon atom) were used instead of the polysilsesquioxane-containing particle (C), could not satisfy the evaluation criterion B. Comparative Example 4, in which a cage silsesquioxane compound F-1 with an acryloyl group as a substituent was used instead of the polysilsesquioxane-containing particle (C), had a Charpy impact strength not satisfying the evaluation criterion B and had low toughness. Comparative Example 5, in which a cage silsesquioxane compound F-2 with a methyl group as a substituent was used instead of the polysilsesquioxane particle (C), also had a specific wear rate not satisfying the evaluation criterion B. These results and the results of Exemplary Embodiments 1 to 6 show that a random polysilsesquioxane that is composed mainly of a structure with a siloxane bond containing three oxygen atoms per silicon atom and that is insoluble in a mixture of the polyfunctional radically polymerizable compound (A) and the monofunctional radically polymerizable compound (B) is preferred.

In modeling with a 3D printer, the polysilsesquioxane-containing particle (C) with an average particle size not sufficiently smaller than the thickness of the stack is expected to affect the adhesiveness at an interface of the stack. Considering high modeling accuracy in Exemplary Embodiments 1 to 6, depending on the specifications of an apparatus used for modeling and the modeling conditions, the polysilsesquioxane-containing particle (C) preferably has an average particle size of 5 um or less.

The results of Tables 3 and 4 show that Exemplary Embodiments 7 to 13, in which the polyfunctional radically polymerizable compound (A) in the photocurable resin composition had an ethylenically unsaturated group equivalent of 700 g/eq or more and 7,000 g/eq or less, were good in all the items. In contrast, Comparative Examples 6 and 7, in which the polyfunctional radically polymerizable compound (A) in the photocurable resin composition had an ethylenically unsaturated group equivalent of less than 700 g/eq, had a Charpy impact strength not satisfying the evaluation criterion B and had low toughness. Comparative Example 8 with an ethylenically unsaturated group equivalent of more than 7,000 g/eq had poor modeling properties and did not satisfy the evaluation criterion B. These results show that the radically polymerizable compound (A) preferably has an ethylenically unsaturated group equivalent of 700 g/eq or more and 7,000 g/eq or less.

Exemplary Embodiments 14 to 16, which contained the polysilsesquioxane-containing particle (C) with polysilsesquioxane on the surface thereof, and Exemplary Embodiments 17 and 18, which contained the surface-modified polysilsesquioxane-containing particle (C), were good in all the evaluation items. These results show that the polysilsesquioxane-containing particle (C) need not be composed entirely of polysilsesquioxane and that the polysilsesquioxane need not be exposed on the surface thereof.

Exemplary Embodiments 14 to 16, which contained the polysilsesquioxane-containing particle (C) with polysilsesquioxane on the surface thereof, had a smaller specific wear rate than Exemplary Embodiments 17 and 18, which were surface-modified with a silane agent. On the other hand, the polysilsesquioxane-containing particle (C) in the curable resin composition in Exemplary Embodiments 17 and 18, which contained the polysilsesquioxane-containing particle (C) surface-modified with a silane agent, had higher dispersion stability than the polysilsesquioxane-containing particle (C) not surface-modified.

These results show that the use of particles with polysilsesquioxane on the particle surface improved sliding characteristics, and particles surface-modified with a silane agent improved dispersion stability. Furthermore, Exemplary Embodiment 17, which was surface-modified with a silane agent without a radically polymerizable group, had higher toughness than Exemplary Embodiment 18, which was surface-modified with a silane agent with a radically polymerizable group. This result shows that the use of polysilsesquioxane-containing particles without a radically polymerizable substituent on the particle surface is preferred in terms of the toughness of the cured product.

On the other hand, Exemplary Embodiment 18 with a radically polymerizable substituent had a higher effect of reducing the sedimentation of the polysilsesquioxane-containing particle (C) in the curable resin composition. It was found that the use of polysilsesquioxane-containing particles with a radically polymerizable substituent on the particle surface was preferred in terms of the storage stability of the curable resin composition.

The present invention is not limited to these embodiments, and various changes and modifications may be made therein without departing from the spirit and scope of the present invention. Accordingly, the following claims are attached to make the scope of the present invention public.

This application claims the benefit of Japanese Patent Application No. 2020-173693 filed October 15, 2020 and No. 2021-163277 filed October 4, 2021, which are hereby incorporated by reference herein in their entirety.

## Claims

1. A photocurable resin composition for three-dimensional modeling, comprising: a polyfunctional radically polymerizable compound (A); a monofunctional radically polymerizable compound (B); a polysilsesquioxane-containing particle (C); and a curing agent (D),
wherein the polyfunctional radically polymerizable compound (A) has an ethylenically unsaturated group equivalent of 700 g/eq or more and 7,000 g/eq or less, and
a polysilsesquioxane-containing particle (C) content is 5 parts by mass or more and 50 parts by mass or less per 100 parts by mass of the polyfunctional radically polymerizable compound (A) and the monofunctional radically polymerizable compound (B) in total.

2. The photocurable resin composition for three-dimensional modeling according to Claim 1, wherein the polysilsesquioxane-containing particle (C) has polysilsesquioxane on a surface thereof.

3. The photocurable resin composition for three-dimensional modeling according to Claim 2, wherein the polysilsesquioxane-containing particle (C) is composed entirely of polysilsesquioxane.

4. The photocurable resin composition for three-dimensional modeling according to Claim 2, wherein the polysilsesquioxane-containing particle (C) has a core-shell structure, and the core-shell structure has a shell composed of polysilsesquioxane.

5. The photocurable resin composition for three-dimensional modeling according to any one of Claims 1 to 4, wherein the polyfunctional radically polymerizable compound (A) is a single polyfunctional radically polymerizable compound with an ethylenically unsaturated group equivalent of 700 g/eq or more and 7,000 g/eq or less.

6. The photocurable resin composition for three-dimensional modeling according to any one of Claims 1 to 4, wherein the polyfunctional radically polymerizable compound (A) is a mixture containing a plurality of polyfunctional radically polymerizable compounds with an ethylenically unsaturated group equivalent of 700 g/eq or more and 7,000 g/eq or less calculated by weighted averaging ethylenically unsaturated group equivalents of the polyfunctional radically polymerizable compounds by their weight ratio.

7. The photocurable resin composition for three-dimensional modeling according to Claim 6, wherein the polyfunctional radically polymerizable compound (A) is a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq.

8. The photocurable resin composition for three-dimensional modeling according to any one of Claims 1 to 7, wherein a polyfunctional radically polymerizable compound (A) content is 20 parts by mass or more and 75 parts by mass or less per 100 parts by mass of the polyfunctional radically polymerizable compound (A) and the monofunctional radically polymerizable compound (B) in total.

9. The photocurable resin composition for three-dimensional modeling according to any one of Claims 1 to 8, wherein the polyfunctional radically polymerizable compound (A) is a (meth)acrylate compound or a urethane (meth)acrylate compound with a polyether structure, a polyester structure, or a polycarbonate structure.

10. The photocurable resin composition for three-dimensional modeling according to any one of Claims 1 to 9, wherein the polysilsesquioxane-containing particle (C) is composed mainly of a random type component.

11. The photocurable resin composition for three-dimensional modeling according to any one of Claims 1 to 10, wherein the polysilsesquioxane-containing particle (C) has an average particle size of 0.7 um or more and 5 um or less.

12. The photocurable resin composition for three-dimensional modeling according to any one of Claims 1 to 11, wherein the polysilsesquioxane-containing particle (C) has no radically polymerizable functional group on a surface thereof.

13. The photocurable resin composition for three-dimensional modeling according to any one of Claims 1 to 11, wherein the polysilsesquioxane-containing particle (C) has a radically polymerizable functional group on a surface thereof.

14. The photocurable resin composition for three-dimensional modeling according to any one of Claims 1 to 13, wherein the monofunctional radically polymerizable compound (B) is selected from acrylamide compounds, (meth)acrylate compounds, maleimide compounds, and N-vinyl compounds.

15. The photocurable resin composition for three-dimensional modeling according to any one of Claims 1 to 14, wherein the curing agent (D) contains a radical photopolymerization initiator.

16. A cured product produced by curing the photocurable resin composition according to any one of Claims 1 to 15.

17. The cured product according to Claim 16, wherein the cured product has a specific wear rate of less than 0.5 mm³·N-¹·Km⁻¹.

18. The cured product according to Claim 16 or 17, wherein the cured product has a friction coefficient of less than 1.0.

19. A method for producing a three-dimensional object by an optical modeling method, comprising the steps of:
providing a photocurable resin composition in a layer form; and
applying light energy to the photocurable resin composition in the layer form based on slice data of a modeling model to cure the photocurable resin composition,
wherein the photocurable resin composition contains a polyfunctional radically polymerizable compound (A), a monofunctional radically polymerizable compound (B), a polysilsesquioxane-containing particle (C), and a curing agent (D),
the polyfunctional radically polymerizable compound (A) has an ethylenically unsaturated group equivalent of 700 g/eq or more and 7,000 g/eq or less, and
a polysilsesquioxane-containing particle (C) content is 5 parts by mass or more and 50 parts by mass or less per 100 parts by mass of the polyfunctional radically polymerizable compound (A) and the monofunctional radically polymerizable compound (B) in total.

20. The method for producing a three-dimensional object according to Claim 19, further comprising the step of heat-treating a modeling product produced by the step of applying light energy.

21. The method for producing a three-dimensional object according to Claim 19 or 20, wherein the light energy is light emitted from a laser source or a projector.

22. The method for producing a three-dimensional object according to any one of Claims 19 to 21, wherein the polysilsesquioxane-containing particle (C) has polysilsesquioxane on a surface thereof.

23. The method for producing a three-dimensional object according to Claim 22, wherein the polysilsesquioxane-containing particle (C) is composed entirely of polysilsesquioxane.

24. The method for producing a three-dimensional object according to Claim 22, wherein the polysilsesquioxane-containing particle (C) has a core-shell structure, and the core-shell structure has a shell composed of polysilsesquioxane.

25. The method for producing a three-dimensional object according to any one of Claims 19 to 24, wherein the polyfunctional radically polymerizable compound (A) is a single polyfunctional radically polymerizable compound with an ethylenically unsaturated group equivalent of 700 g/eq or more and 7,000 g/eq or less.

26. The method for producing a three-dimensional object according to any one of Claims 19 to 24, wherein the polyfunctional radically polymerizable compound (A) is a mixture containing a plurality of polyfunctional radically polymerizable compounds with an ethylenically unsaturated group equivalent of 700 g/eq or more and 7,000 g/eq or less calculated by weighted averaging ethylenically unsaturated group equivalents of the polyfunctional radically polymerizable compounds by their weight ratio.

27. The method for producing a three-dimensional object according to Claim 26, wherein the polyfunctional radically polymerizable compound (A) is a mixture of a polyfunctional radically polymerizable compound with an ethylenically unsaturated group equivalent of 700 g/eq or more and 7,000 g/eq or less and a polyfunctional radically polymerizable compound with an ethylenically unsaturated group equivalent of less than 700 g/eq.

28. The method for producing a three-dimensional object according to any one of Claims 19 to 27, wherein a polyfunctional radically polymerizable compound (A) content is 20 parts by mass or more and 75 parts by mass or less per 100 parts by mass of the polyfunctional radically polymerizable compound (A) and the monofunctional radically polymerizable compound (B) in total.

29. The method for producing a three-dimensional object according to any one of Claims 19 to 28, wherein the polyfunctional radically polymerizable compound (A) is a (meth)acrylate compound or a urethane (meth)acrylate compound with a polyether structure, a polyester structure, or a polycarbonate structure.

30. The method for producing a three-dimensional object according to any one of Claims 19 to 29, wherein the polysilsesquioxane-containing particle (C) is composed mainly of a random type component.

31. The method for producing a three-dimensional object according to any one of Claims 19 to 30, wherein the polysilsesquioxane-containing particle (C) has an average particle size of 0.7 um or more and 5 um or less.
